# EUROPÄISCHE PATENTANMELDUNG

(11) **EP 2 328 119 A1**
(43) Veröffentlichungstag der Anmeldung: **01.06.2011**
(21) Anmeldenummer: 10000711.1
(22) Anmeldetag: 25.01.2010
(51) Int. Cl.: G06Q 10/00

(54) **Ticketingsystem**

(30) Priorität: 16.11.2009 EP 09014273
(71) Anmelder: Scheidt & Bachmann GmbH, 41238 Mönchengladbach (DE)
(72) Erfinder: Miller, Norbert Dr., 41063 Mönchengladbach (DE); Augustyniak, Matthias, 41844 Wegberg (DE)
(74) Vertreter: Stenger, Watzke & Ring

(57) **Zusammenfassung**

Um den Anwendungsbereich eines auf Basis von virtuellen Tickets arbeitenden Ticketingsystems zu erweitern, wird mit der Erfindung vorgeschlagen ein Verfahren zum Betrieb eines Ticketingsystems, bei dem
- ein virtuelles Ticket (5) erzeugt wird,
- dem virtuellen Ticket (5) ein benutzerunabhängiger Zugriffscode (6) zugeordnet wird,
- das virtuelle Ticket (5) zusammen mit dem Zugriffscode (6) gespeichert wird,
- der Zugriffscode (6) auf einen separaten Datenspeicher (8) hinterlegt wird

und bei dem ein Zugriff auf das virtuelle Ticket (5) durch Eingabe des auf dem separaten Datenspeicher (8) hinterlegten Zugriffscode (6) an einer dafür vorgesehenen Eingabestelle (9) des Ticketingsystems (1) erfolgt.

## Beschreibung

Die Erfindung betrifft ein Verfahren zum Betrieb eines Ticketingsystems.

Ticketingsysteme, auch Zahlkartensysteme genannt, sind aus dem Stand der Technik an sich bekannt, ebenso wie Verfahren zu deren Betrieb.

Es finden derzeit insbesondere solche Ticketingsysteme Verwendung, die auf der Basis von real existierenden Tickets, wie zum Beispiel Magnetkarten oder dergleichen arbeiten. Es sind aber auch schon solche Ticketingsysteme bekannt geworden, die auf Basis von virtuellen Tickets arbeiten. Gemäß solcher Systeme wird ein Ticket nicht mehr durch ein von einem Benutzer mit sich zu tragendes Medium gebildet. Das Ticket liegt vielmehr als virtuelles Ticket in Form eines Datensatzes vor, der in einem Speicher des Ticketingsystems, dem sogenannten Back Office hinterlegt wird. Dabei erfolgt die Zuordnung des virtuellen Tickets zum Benutzer über personenbezogene Daten des Benutzers, die zusammen mit dem virtuellen Ticket im Back Office des Ticketingsystems gespeichert sind. Der Zugriff auf das virtuelle Ticket erfolgt in der Form, dass die personenbezogenen Daten als Suchkriterium und Schlüssel benutzt werden.

Ticketingsysteme mit virtuellen Tickets werden derzeit insbesondere von Fluggesellschaften für die Flugzeugzugangskontrolle, das sogenannte Boarding verwendet.

Die vorbekannten Ticketingsysteme, die auf Basis von virtuellen Tickets arbeiten, sind in nachteiliger Weise nicht für anonyme Benutzer geeignet. Der Zugriff auf das virtuelle Ticket erfolgt über die dem Ticketingsystem bekannten personenbezogenen Daten, was eine Anonymisierung ausschließt. Der Einsatz vorbekannter Ticketingsysteme ist damit auf nur sehr spezielle Anwendungsbereiche begrenzt.

Die Aufgabe der Erfindung ist es, den Anwendungsbereich von auf Basis von virtuellen Tickets arbeitenden Ticketingsystemen zu erweitern.

Zur Lösung dieser Aufgabe wird mit der Erfindung vorgeschlagen ein Verfahren zum Betrieb eines Ticketingsystems, bei dem
- ein virtuelles Ticket erzeugt wird,
- dem virtuellen Ticket ein benutzerunabhängiger Zugriffscode zugeordnet wird,
- das virtuelle Ticket zusammen mit dem Zugriffscode gespeichert wird,
- der Zugriffscode auf einem separaten Datenspeicher des Benutzers hinterlegt wird
und bei dem ein Zugriff auf das virtuelle Ticket durch Eingabe des auf dem separaten Datenspeicher hinterlegten Zugriffscode an eine dafür vorgesehenen Eingabestelle des Ticketingsystems erfolgt.

Das erfindungsgemäße Verfahren erlaubt in vorteilhafter Weise den Betrieb eines auf Basis von virtuellen Tickets arbeitenden Ticketingsystems auch für anonyme Benutzer. Die Verwendung, das heißt Nutzung von personenbezogenen Daten ist im Unterschied zu den aus dem Stand der Technik vorbekannten Systemen nicht erforderlich. Das erfindungsgemäße Verfahren ist damit auch in solchen Bereichen einsetzbar, die anders als beispielsweise die Flugzeugzugangskontrolle die Erfassung von personenbezogenen Daten nicht vorsehen. Zu nennen sind hier beispielsweise Tickets für den öffentlichen Personennahverkehr in Form beispielsweise von Tages- oder Monatsfahrausweisen.

Der erfindungsgemäße Betrieb geht wie folgt von statten. Ein Benutzer erwirbt ein Ticket in Form eines virtuellen Tickets, das heißt in Form eines Datensatzes. Dieser Datensatz enthält sämtliche Ticketinformationen, was im Falle beispielsweise eines Fahrausweises für den öffentlichen Personennahverkehr die Fahrpreiszone, die Uhrzeit, die Gültigkeitsdauer, etwaige Benutzungsbeschränkungen und/oder dergleichen umfassen kann. Dem erzeugten virtuellen Ticket wird ein Zugriffscode zugeordnet, und zwar ein benutzerunabhängiger Zugriffscode. Dies kann beispielsweise eine einfache Zahlen- und/oder Buchstabenfolge sein.

Der Zugriffscode wird zusammen mit dem virtuellen Ticket im Back Office des Ticketingsystems gespeichert. Da es sich bei dem Zugriffscode um einen eineindeutigen Code handelt, kann über diesen auch eine eineindeutige Identifizierung des zugeordneten virtuellen Tickets erfolgen.

Der Zugriffscode wird ferner auf einem separaten Datenspeicher des Benutzers hinterlegt. Bei dem Datenspeicher kann es sich beispielsweise um eine Speicherkarte, beispielsweise in Form einer Smartcard, einer Chipkarte oder dergleichen, aber auch um andere Speichermedien, wie zum Beispiel ein Mobiltelefon, eine mobile Rechnereinheit oder dergleichen handeln. Bei dem Speicher kann es sich aber auch um einen einfachen Ausdruck des Zugriffscodes auf Papier handeln.

Um nun Zugriff auf das virtuelle Ticket bekommen zu können, ist der Zugriffscode an einer dafür vorgesehenen Eingabestelle des Ticketingsystems einzugeben. Dies kann entweder manuell oder auch automatisch dadurch erfolgen, dass die Eingangsstelle den auf den separaten Datenspeicher hinterlegten Zugriffscode beispielsweise funktechnisch ausliest. Der über die Eingangsstelle dem Ticketingsystem mitgeteilte Zugriffscode wird nun systemseitig zur eineindeutigen Identifizierung des vorher benutzerseitig erworbenen virtuellen Tickets genutzt. Der zugehörige Datensatz wird systemseitig ausgelesen und führt an der Eingabestelle des Zugriffscodes zur Erzeugung eines entsprechenden Ausgangssignals, was beispielsweise eine Freischaltung bewirkt, einen Zugang ermöglicht und/oder eine dergleichen Validierungs- und/oder Zugangskontrolle abschließt.

Der Vorteil der erfindungsgemäßen Verfahrensdurchführung ist darin zu sehen, dass sie unter Verwendung eines eineindeutigen Zugriffscodes personenunabhängig durchgeführt wird. Dabei kann der Zugriffscode gemäß einer alternativen Ausgestaltungsform der Erfindung auch personenbezogene Daten beinhalten, wie zum Beispiel den elektronischen Fingerabdruck, um gegebenenfalls besonders sicherheitsrelevanten Aspekten Rechnung tragen zu können. Das erfindungsgemäße Verfahren erlaubt aber im Unterschied zum Stand der Technik einen grundsätzlichen Ticketingsystembetrieb ohne personenbezogene Daten, so dass auch eine anonymisierte Nutzung, das heißt eine Verwendung auch durch anonyme Benutzer möglich ist.

Gemäß einem weiteren Merkmal der Erfindung ist vorgesehen, dass dem virtuellen Ticket der Zugriffscode bei der Erzeugung des virtuellen Tickets zugeordnet wird. Dabei kann als Zeitpunkt der Erzeugung des virtuellen Tickets der Zeitpunkt des Verkaufs an den Benutzer gewählt werden. Alternativ ist es auch möglich, als Zeitpunkt den Zeitpunkt zu wählen, zu dem das Ticket produziert, gegebenenfalls vorproduziert wird. Dies kann insbesondere Tickets wie Tages- oder Monatsfahrausweise für den öffentlichen Nahverkehr betreffen, die in Form von Smartcards über systemferne Verkaufsstellen wie zum Beispiel Kioske und Zeitschriftenläden vertrieben werden. Erfindungswesentlich ist allein, dass ein erzeugtes virtuelles Ticket bei seiner späteren Verwendung eineindeutig über den dem Ticket zugeordneten Zugriffscode identifizierbar ist.

Gemäß einem weiteren Merkmal der Erfindung ist vorgesehen, dass das virtuelle Ticket zusammen mit dem Zugriffscode zentral gespeichert wird. Es können gegebenenfalls auch mehrere Zentralstellen vorgesehen sein. Von Bedeutung ist allein, dass das virtuelle Ticket und der das virtuelle Ticket eineindeutig identifizierende Zugriffscode abrufbar gespeichert sind, und zwar bevorzugterweise ohne Manipulationszugriffsmöglichkeit durch den Benutzer.

Als vom Benutzer mitzuführende separate Datenspeicher kommen grundsätzlich alle Datenspeicher in Frage, die der Speicherung eines Zugriffscodes nach der Erfindung dienen können. In erster Linie sind hierunter gängige Datenspeicher zu verstehen, die vom Benutzer auf einfache Weise und leicht mitgeführt werden können. Dies können Chipkarten, Magnetstreifenkarten, Smartcards und/oder dergleichen sein. Auch andere Speichermedien, wie zum Beispiel Mobiltelefone, Laptops, Notebooks, iPods und/oder dergleichen eignen sich hierfür natürlich ebenfalls. Hinsichtlich des Datenspeichers kann dabei grundsätzlich unterschieden werden zwischen solchen, die der Benutzer ohnehin schon in seinem Besitz hat und solchen, die der Benutzer neu erwirbt. Handelt es sich bei dem Datenspeicher um einen solchen, der bereits im Besitz des Benutzers befindlich ist, so wird der Zugriffscode auf diesen Datenspeicher übertragen. Dies kann beispielsweise mittels herkömmlicher Schnittstellen, wie zum Beispiel Bluetooth erfolgen. Alternativ ist auch die Verwendung von Datenspeichern möglich, die der Benutzer beim Kauf des virtuellen Tickets erwirbt und mit dem Zugriff auf das virtuelle Ticket an der dafür vorgesehenen Eingabestelle des Ticketingsystems wieder abgibt. Es können in diesem Zusammenhang sowohl Einwegspeicher als auch wiederverwendbare Datenspeicher zum Einsatz kommen.

Alternativ kann der Zugriffscode auch durch den Nutzer selber zur Verfügung gestellt werden, indem der Zugriffscode von einem Medium bzw. Ausweis des Nutzers ausgelesen wird. Das Auslesen kann in elektronischer oder optischer Form erfolgen. Der ausgelesene Zugriffscode wird zusammen mit dem virtuellen Ticket gespeichert und dient der Wiedererkennung des Nutzers im System. Dies kann dazu genutzt werden, um zum Beispiel Ausweise, die keinen elektronischen Speicher enthalten oder bei denen der Inhalt des elektronischen Speichers nur gelesen werden kann/darf, im System nutzbar zu machen. Unter die Gruppe der Medien ohne elektronischen Speicher fallen zum Beispiel Personalausweise oder Führerscheine und in die Gruppe der Medien, deren Speicher nur gelesen werden kann/darf, fallen zum Beispiel Reisepässe, Kreditkarten mit RFID-Technologie, Smartcards fremder Anbieter etc.

In der vorbeschriebenen Ausgestaltungsform des erfindungsgemäßen Verfahrens wird das virtuelle Ticket, das heißt der Datensatz im Datenspeicher einer zentralen Datenverarbeitungseinrichtung abgelegt. Kommt es an einer an die zentrale Datenverarbeitungseinrichtung kommunikationstechnisch angeschlossenen Eingabestelle zu einem Zugriff auf das virtuelle Ticket, so werden von der Eingabestelle die Zugriffsdaten an die zentrale Datenverarbeitungseinrichtung übersandt. Hier findet dann eine Zuordnung zum virtuellen Ticket statt, ebenso wie eine Überprüfung auf Gültigkeit. Das Ergebnis dieser von der zentralen Datenverarbeitungseinrichtung durchgeführten Abfrage wird in Form eines Datensatzes an die zugehörige Eingabestelle übersandt. Hier findet dann in Entsprechung des Ergebnisses der Überprüfung durch die zentrale Datenverarbeitungseinrichtung eine Vermittlung an den Inhaber des virtuellen Tickets statt, beispielsweise dahingehend, dass ihm mitgeteilt wird, dass das virtuelle Ticket gültig ist und die von ihm angeforderte Aktion ausgeführt werden kann. Im Falle der nicht erfolgreich durchgeführten Prüfung kann dem Verwender des virtuellen Tickets eine Fehlermeldung angezeigt werden.

In einer alternativen Ausgestaltung des vorerläuterten Verfahrens wird vorgeschlagen, dass bei einem erstmaligen Zugriff auf das virtuelle Ticket eine Kopie des Tickets erstellt und in einem Datenspeicher der Eingabestelle gespeichert wird, über die der Zugriff erfolgt ist. Gemäß dieser alternativen Ausgestaltungsform der Erfindung findet die Verarbeitung einer Anfrage lokal und nicht zentral statt. Dies wird erfindungsgemäß dadurch erreicht, dass im Falle eines erstmaligen Zugriffs eine Kopie des zentral hinterlegten Tickets erstellt wird. Diese Kopie wird an die zugehörige Eingabestelle übersandt und in einem zur Eingabestelle gehörenden Datenspeicher hinterlegt. Die Ticketkopie enthält alle zur Tarifermittlung notwendigen Ticketdaten und ermöglicht bei nachfolgenden Nutzungen eine rein lokale Verarbeitung. Kommt es nun an dieser Eingabestelle zu einer nochmaligen Verwendung des virtuellen Tickets, so kann die Verarbeitung desselben anhand der im Datenspeicher der Eingabestelle vorhandenen Ticketkopie durchgeführt werden, so dass ein Zugriff auf das von der zentralen Datenverarbeitungseinrichtung verwaltete Original nicht erforderlich ist. Dies erspart in vorteilhafter Weise Kommunikation- und Rechnerzeit bzw. -kapazität, so dass ein Geschwindigkeitsvorteil erreicht wird. Gemäß der alternativen Ausgestaltungsform des Verfahrens kann in Abwandlung zum Vorbeschriebenen vorgesehen sein, dass der dem virtuellen Ticket zugeordnete Zugriffscode ein benutzerabhängiger Zugriffscode ist. Ein solcher benutzerabhängiger Zugriffscode kann beispielsweise gebildet sein durch Identifikationsnummern, Codes oder dergleichen von Kreditkarten, Zahlungskarten im Allgemeinen, Ausweiskarten, wie beispielsweise Personalausweise und/oder dergleichen. Die Verwendung eines benutzerabhängigen Zugriffscodes hat insbesondere den Vorteil, dass ein Benutzer des virtuellen Tickets auf bereits in seinem Besitz befindliche Identifizierungsmittel zurückgreifen kann, die eineindeutig sind und deshalb in Kombination mit der Verwendung eines virtuellen Tickets nach der Erfindung Verwendung finden können. Ein zusätzlicher Organisationsaufwand insbesondere die Bereitstellung von erst noch zu generierenden Zugriffscodes kann vermieden werden. Insgesamt wird mit der alternativen Ausgestaltung der Erfindung also ein Verfahren vorgeschlagen, was in Abwandlung zur Formulierung nach Anspruch 1 über einen benutzerabhängigen Zugriffscode verfügt, der einem virtuellen Ticket zugeordnet wird, von dem dann in Ausgestaltung der alternativen Ausführungsform der Erfindung eine Kopie erstellt wird.

Alternativ kann eine Tarifermittlung jeweils auch dem Zentralrechner erfolgen, ohne dass Kopien des virtuellen Tickets lokal gespeichert werden.

Demnach betrifft das erfindungsgemäße Verfahren in der alternativen Ausgestaltung nach der Erfindung auch ein Verfahren zum Betrieb eines Ticketingsystems, bei dem
- ein virtuelles Ticket erzeugt wird,
- dem virtuellen Ticket ein Zugriffscode zugeordnet wird,
- das virtuelle Ticket zusammen mit dem Zugriffscode gespeichert wird,
- der Zugriffscode auf einen separaten Datenspeicher hinterlegt wird
und bei dem ein Zugriff auf das virtuelle Ticket durch Eingabe des auf dem separaten Datenspeicher hinterlegten Zugriffscode an einer dafür vorgesehenen Eingabestelle des Ticketingsystems erfolgt, wobei bei einem erstmaligen Zugriff auf das virtuelle Ticket eine Kopie des Tickets erstellt und in einem Datenspeicher der Eingabestelle gespeichert wird, über die der Zugriff erfolgt.

Die Durchführung des erfindungsgemäßen Verfahrens nach der alternativen Ausgestaltungsform bietet sich insbesondere dann an, wenn zu erwarten steht, dass ein und dasselbe virtuelle Ticket vom Verwender mehrfach benutzt werden soll, vorzugsweise über stets die gleiche Eingabestelle. Dies ist insbesondere im öffentlichen Nahverkehr der Fall, der insbesondere von Pendlern genutzt wird, die tagtäglich dieselbe Strecke zur Arbeit hin und zurück fahren. Die alternative Ausgestaltung der Erfindung ermöglicht in diesem Fall eine enorme Vereinfachung und Reduzierung der für eine Ticketüberprüfung erforderlichen Kommunikation, da Mehrfachübertragungen vermieden werden können. Es findet vielmehr eine Datenverarbeitung vor Ort, das heißt lokal statt, so dass eine Kommunikation mit der zentralen Datenverarbeitungseinrichtung entfallen kann.

Das Verfahren in der alternativen Ausgestaltungsform hat darüber hinaus den Vorteil, dass eine bestimmungsgemäße Funktion auch im Offline-Betrieb möglich ist, wenn also die kommunikationstechnische Verbindung zwischen der zentralen Datenverarbeitungseinrichtung und der daran angeschlossenen Eingabestelle unterbrochen und/oder gestört ist. Da für die Verarbeitung eines virtuellen Tickets der Zugriff auf die zentrale Datenverarbeitungseinrichtung nicht erforderlich ist, kann auch im Cffline-Betrieb eine bestimmungsgemäße Verfahrensdurchführung aufrechterhalten bleiben.

Die lokal gespeicherte Ticketkopie kann im lokalen Speicher für eine vorgebbare Zeitspanne gespeichert sein, wobei nach Ablauf dieser vorgebbaren Zeitspanne eine automatische Löschung erfolgt. Eine solche automatische Löschung kann beispielsweise nach einigen Tagen oder Wochen nach der erstmaligen Ticketverwendung oder auch nach der letztmaligen Ticketverwendung erfolgen. Handelt es sich bei dem virtuellen Ticket beispielsweise um eine Monatskarte für den öffentlichen Nahverkehr, kann eine automatische Löschung nach Ablauf der Gültigkeitsdauer automatisch erfolgen, was von der zentralen Datenverarbeitungseinrichtung bei einem erstmaligen Zugriff vorausberechnet werden kann. Ferner kann die zentrale Datenverarbeitungsstation bei der Verteilung der Ticketdaten die Gültigkeitsdauer der lokalen Kopie auf Grund von Kartendaten ermitteln und bei der Verteilung der Ticketdaten mit vorgeben.

Gemäß einer weiteren Ausgestaltung der Erfindung kann vorgesehen sein, dass im Falle eines erstmaligen Zugriffs auf das virtuelle Ticket eine Kopie des Tickets nicht nur in dem Datenspeicher der Eingabestelle hinterlegt wird, über die der Zugriff erfolgt, sondern dass eine Ticketkopie mehreren Eingabestellen gleichzeitig zur Verfügung gestellt wird. Beispielsweise kann vorgesehen sein, dass eine Mehrzahl von Eingabestellen zu einem sogenannten Nahbereich gehören. Wird über eine Eingabestelle dieses Nahbereichs ein erstmaliger Zugriff generiert, so werden sämtliche Eingabestellen des Nahbereichs mit einer Kopie des virtuellen Tickets versorgt. Diese Ausgestaltung des Verfahrens stellt sicher, dass eine schnelle Verfahrensabwicklung auch dann erreicht wird, wenn ein Verwender eines virtuellen Tickets mehrere Eingabestellen eines Nahbereichs abwechselnd verwendet. Dabei kann in diesem Zusammenhang vorgesehen sein, dass jede Eingabestelle über einen separaten Datenspeicher verfügt. Alternativ ist es natürlich auch möglich, für die Eingabestellen eines Nahbereichs einen gemeinsamen Datenspeicher vorzusehen, der beispielsweise Bestandteil einer Datenverarbeitungseinheit ist. In diesem Fall wird eine Art Sub- oder Unternetz ausgebildet.

Gemäß einem weiteren Merkmal der Erfindung kann vorgesehen sein, dass von einer Eingabestelle erfasste Daten gespeichert und/oder zur Speicherung an eine Zentralstelle übermittelt werden. Bei dieser Zentralstelle kann es sich um die Datenverarbeitungseinheit eines Unternetzes oder um die zentrale Datenverarbeitungseinrichtung des gesamten Ticketingsystems handeln. Der Vorteil der Übermittlung an die zentrale Datenverarbeitungseinrichtung liegt darin, dass hier automatisch entsprechende Kopien der neuen Daten erstellt und an diejenigen Eingabestellen zurückübermittelt werden können, die die Originaldatensätze bereits erhalten haben. Auf diese Weise wird sichergestellt, dass sämtliche Eingabestellen stets über die gültigen Datensätze verfügen. Diese alternative Ausgestaltung der Erfindung eignet sich insbesondere im Rahmen von sogenannten Pre-Paid-Vorgängen. Ein Benutzer hat ein bestimmtes Konto im Speicher der zentralen Datenverarbeitungseinrichtung hinterlegt. Bei einer Benutzung ist von diesem Konto der für die Benutzung entsprechende Betrag abzubuchen. Gemäß der vorbeschriebenen Verfahrensdurchführung erfolgt dies durch die Datenübermittlung von der Eingabestelle zur zentralen Datenverarbeitungseinrichtung. Hier wird dann der neue Kontostand zentral berechnet und gegebenenfalls an eine oder mehrere Eingabestellen des Ticketingsystems zurückübergeben, so dass eine lokale Verarbeitung an den entsprechenden Eingabestellen auf Basis von aktuellen Datensätzen erfolgen kann. Die entsprechenden Eingabestellen können in einer Verteilerliste in der zentralen Datenverarbeitungseinrichtung hinterlegt und/oder geführt werden.

Die erfindungsgemäße Verfahrensdurchführung kann insbesondere im Personennahverkehr Anwendung finden, in welchem Fall es sich bei einem virtuellen Ticket um einen Fahrausweis, beispielsweise eine Tageskarte, eine Wochenkarte und/oder eine Monatskarte handelt, die im Gültigkeitsfall dazu berechtigt, den öffentlichen Nahverkehr zu benutzen, wie beispielsweise Busse und/oder Bahnen. Bei einer erstmaligen Inbenutzungnahme eines solchen Tickets werden die von der entsprechenden Eingabestelle des Ticketingsystems erfassten Daten zur Identifizierung des virtuellen Tickets an die zentrale Datenverarbeitungseinrichtung übertragen. Hier findet dann eine Identifizierung des virtuellen Tickets statt und eine Kopie desselben wird an den Datenspeicher der anfragenden Eingabestelle übersandt. Die übersandten Daten können zum Beispiel Informationen über Preisstufen, Gültigkeitsdauer und Gültigkeitsgebiet enthalten sowie Hot-, White- und/oder Blacklist-Einträge. All diese Informationen werden lokal in dem Datenspeicher der Eingabestelle gespeichert und es findet dort auch eine Überprüfung auf Gültigkeit statt. Verläuft diese Gültigkeitsprüfung positiv, so wird dem Nutzer der Zugang gewährt. Andernfalls nicht.

Die auf den Datenspeicher der lokalen Eingabestelle heruntergeladenen Daten verbleiben für einen vordefinierten Zeitraum von zum Beispiel sieben Tagen oder bis zum Ende der Gültigkeit des virtuellen Tickets im Speicher der Eingabestelle, wobei ein solcher Speicher auch Bestandteil einer lokalen Datenverarbeitungseinheit sein kann, an die eine Mehrzahl von Eingabestellen eines Nahbereichs kommunikationstechnisch angeschlossen sind.

Bei einem wiederholten Erscheinen des Nutzers innerhalb des Vorhaltezeitraums erfolgt die Prüfung der Berechtigung des virtuellen Tickets aufgrund der lokal gespeicherten Daten, das heißt aufgrund der von dem virtuellen Ticket erzeugten und im Datenspeicher der Eingabestelle hinterlegten Ticketkopie. Dieses Vorgehen ist deshalb sinnvoll und von Vorteil, da Menschen im Allgemeinen immer den gleichen Weg zum Beispiel zur Arbeit oder zu Freizeiteinrichtungen nutzen, das heißt regelmäßig die gleiche Strecke im Personennahverkehr zurücklegen und/oder immer wieder die gleichen Bus- und/oder Bahnlinien nutzen. Im Ergebnis dieser Verfahrensdurchführung kann die zu übertragende Datenmenge zwischen Eingabestelle einerseits und zentraler Datenverarbeitungseinrichtung andererseits erheblich reduziert werden, da auf eine Mehrfachübertragung ein und derselben Information vollends verzichtet wird.

Auch im Falle von Störungen oder im Falle eines Offline-Betriebes der kommunikationstechnischen Verbindung zwischen der zentralen Datenverarbeitungseinrichtung und den einzelnen Eingabestellen ist die erfindungsgemäße Verfahrensdurchführung in der alternativen Ausgestaltung von Vorteil, weil bekannten Nutzern weiterhin Zugang gewährt werden kann.

Sollte in einer solchen Situation ein Nutzer mit einer unbekannten Nutzeridentifikation, für die kein virtuelles Ticket lokal existiert, Zugang wünschen, so kann in einer alternativen Ausgestaltung der Erfindung systemseitig eine Abwägung erfolgen, ob einem Nutzer Zugang gewährt werden soll oder nicht. In diesem Zusammenhang kann beispielsweise vorgesehen sein, dass ein Zugang dann gewährt wird, wenn Nutzeridentifikationen vorliegen, die personalisiert sind und eine nachgelagerte Abrechnung erlauben, wie dies beispielsweise im Falle von Kredit-, Girokarten, Personalausweisen, Smartcards mit gespeicherten Nutzerdaten und dergleichen der Fall ist. Ein Zugang auch ohne verfügbares virtuelles Ticket kann dann gestattet werden, da die lokal erfassten Daten nach Beendigung der Störung oder des Offline-Betriebes an die zentrale Datenverarbeitungseinrichtung zur weiteren Verarbeitung übermittelt werden können. Andere Nutzeridentifikationen, die keine Rückschlüsse auf einen Nutzer zulassen, werden hingegen im Störungsfall und/oder im Offline-Betrieb abgewiesen.

Die Verfahrensalternative ermöglicht es darüber hinaus, in der lokalen Datenbank, das heißt der für eine Eingabestelle vorgesehenen Speichereinheit nicht zugelasse und zugelassene Nutzeridentifikationen über Black- und White-Listen zu erkennen. Ferner ist eine statistische Auswertung in einfacher Weise möglich.

Der separate Speicher nach der Erfindung dient dazu, den Zugangscode, der dem virtuellen Ticket zuzuordnen ist, zu speichern, wie vorstehend bereits erläutert. Bei dem separaten Speicher kann es sich in vorteilhafter Weise um einen beim Benutzer des erfindungsgemäßen Ticketingsystems bereits vorhandenen Speicher handeln, wobei "separater Speicher" im Sinne der Erfindung auch solche Speicher meint, die wie auch immer dazu geeignet sind, den Zugangscode dauerhaft aufnehmen und/oder wiedergeben zu können. In diesem Sinne sind unter einem "separaten Speicher" auch Kreditkarten, Identifizierungskarten, wie zum Beispiel Personalausweise und/oder dergleichen zu verstehen. Derartige Ausweis- und/oder Bezahlkarten verfügen über einen eineindeutigen Identifizierungscode, beispielsweise über einen Personalausweiscode im Falle des Personalausweises. Dieser Code kann als Zugangscode im Sinne der Erfindung genutzt werden, so dass der Ausweis, der diesen Code trägt, als "separater Speicher" im Sinne der Erfindung zu verstehen ist. Die Verwendung eines solchen separaten Speichers hat den Vorteil, dass im Besitz des Benutzers des Ticketingsystems bereits befindliche Personalausweise in das Ticketingsystem integriert werden können, so dass die Bereitstellung zusätzlicher Speicher- und/oder Zugangscodes systemseitig nicht mehr erforderlich ist. Auf eine vorhandene Infrastruktur kann insofern seitens des erfindungsgemäßen Ticketingsystems zurückgegriffen werden.

Weitere Merkmale und Vorteile der Erfindung ergeben sich anhand der nachfolgenden Beschreibung anhand der Fign. Dabei zeigen:
- Fig. 1: in schematischer Darstellung das erfindungsgemäße Verfahren und
- Fig. 2: in einer schematischen Darstellung das erfindungsgemäße Verfahren gemäß einer alternativen Ausgestaltungsform.

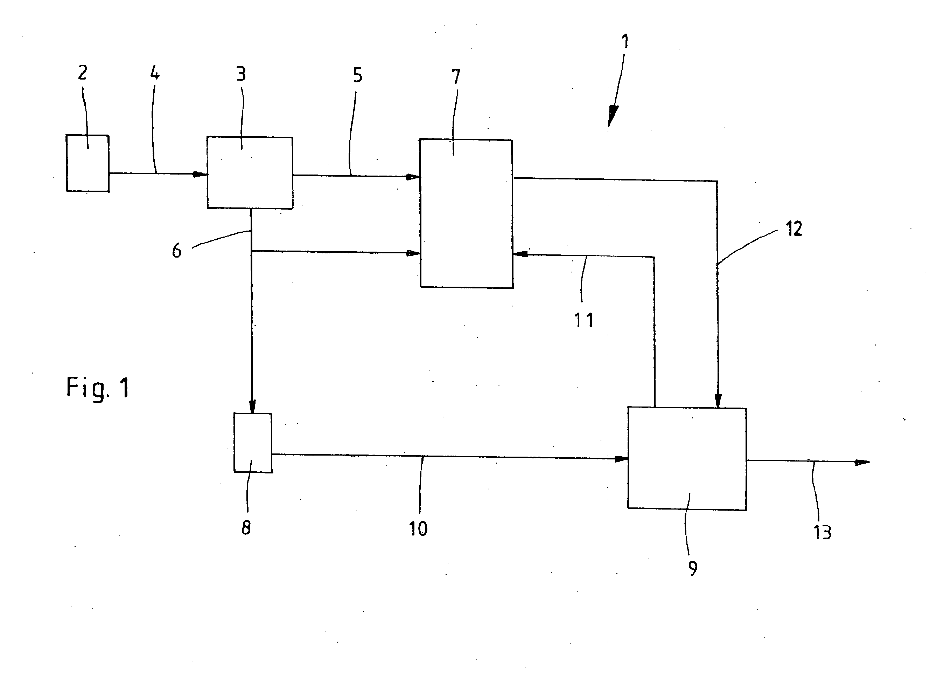

In Fig. 1 ist das erfindungsgemäße Verfahren zum Betrieb eines Ticketingsystems 1 schematisch dargestellt. Ein Benutzer 2 erwirbt bei einer Verkaufsstelle 3 ein elektronisches Ticket 5. Die Kaufanforderung ist in der Darstellung nach Fig. 1 durch den Pfeil 4 symbolisiert.

Das elektronische Ticket 5 wird in einem zentralen Speicher 7 des Ticketingsystems 1, dem sogenannten Back Office hinterlegt.

Mit der Erzeugung des virtuellen Tickets 5 wird ein Zugriffscode 6 generiert, der personenunabhängig ist. Dieser Zugriffscode 6 wird ebenfalls im Speicher 7 des Ticketingsystems 1 hinterlegt, wobei über den Zugriffscode 6 eine eineindeutige Identifizierung des dem Zugriffscode 6 zugeordneten virtuellen Tickets 5 möglich ist.

Der Zugriffscode 6 wird ferner in einem separaten und vom Benutzer 2 mitzuführenden Speicher 8 gespeichert. Soll das virtuelle Ticket 5 nun aktiviert, das heißt benutzerseitig auf das virtuelle Ticket 5 zugegriffen werden, so hat an der zugehörigen Eingabestelle des Ticketingsystems 1, beispielsweise einer Validierungs- und/oder Kontrollstelle 9 eine Eingabe 10 des Zugriffscodes 6 zu erfolgen. Handelt es sich bei dem separaten Datenspeicher 8 um einen elektronischen Speicher, so kann die Eingabe 10 auf elektronischem Wege auch automatisiert durchgeführt werden. Im denkbar einfachsten Fall kann es sich bei dem Datenspeicher 8 auch um ein mit dem Zifferncode bedrucktes Papier handeln. In diesem Fall kann die Eingabe 10 manuell über ein Tastenfeld der Validierungs- und/oder Kontrollstelle 9 erfolgen.

Nach Eingabe des Zugriffscodes 6 leitet die Validierungs- und/oder Kontrollstelle den Zugriffscode 6 an den Speicher 7 des Ticketingsystems 1 weiter. Die Weitergabe des Zugriffscodes 6 an den Speicher 7 ist in der Darstellung nach Fig. 1 durch das Bezugszeichen 11 symbolisiert.

Über den an den Speicher 7 des Ticketingsystems 1 geleiteten Zugriffscode 6 erfolgt eine eineindeutige Identifizierung des zugehörigen virtuellen Tickets 5, welches alsdann in Entsprechung des Pfeils 12 an die Validierungs- oder Kontrollstelle 9 übermittelt wird. Das in Form eines Datensatzes vorliegende virtuelle Ticket 5 löst sodann bei der Validierungs- oder Kontrollstelle 9 ein Ausgangssignal 13 aus, das beispielsweise zu einer Zugangsfreigabe und/oder dergleichen führt.

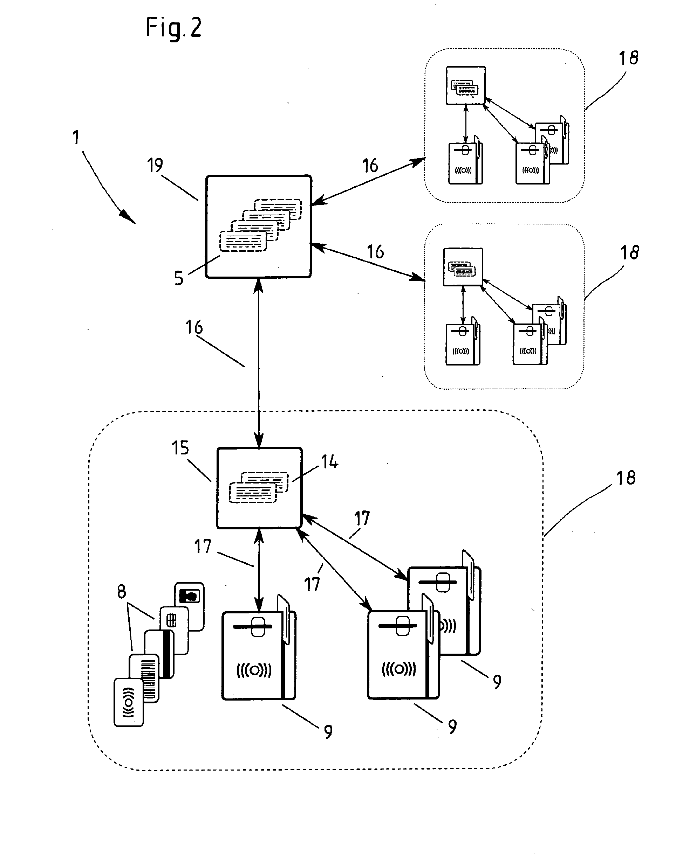

Fig. 2 zeigt in schematischer Darstellung eine alternative Ausgestaltung des erfindungsgemäßen Ticketingsystems. Im Unterschied zur vorerläuterten Fig. 1 wird bei der Ausgestaltungsalternative nach Fig. 2 von dem virtuellen Ticket 5, das zentral in der Datenverarbeitungseinrichtung 19 hinterlegt ist, eine Ticketkopie 14 erstellt, die über eine kommunikationstechnische Verbindung 16 an einem im Detail nicht näher dargestellten Speicher einer Eingabestelle übermittelt und dort gespeichert wird. Dabei zeigt Fig. 2 eine Ausgestaltungsform, dergemäß mehrere zu einem sogenannten Nahbereich 18 gehörende Eingabestellen 9 über eine jeweilige kommunikationstechnische Verbindung 17 an eine Datenverarbeitungseinheit 15 angeschlossen ist, die für sämtliche Eingabestellen 9 eines Nahbereiches 18 den Datenspeicher zur Speicherung einer Ticketkopie 14 aufweist.

Wie die schematische Darstellung nach Fig. 2 erkennen lässt, können eine Mehrzahl von Eingabestellen 9 je Nahbereich 18 vorgesehen sein, wobei eine Mehrzahl von Nahbereichen 18 ausgebildet sein können, wobei jeder Nahbereich 18 jeweils über eine kommunikationstechnische Verbindung 16 an die zentrale Datenverarbeitungseinrichtung 19 angeschlossen ist.

Die Funktionsweise des erfindungsgemäßen Verfahrens nach Fig. 2 geht wie folgt von statten:
Der Inhaber eines virtuellen Tickets 5, das im Original zentral in der Datenverarbeitungseinrichtung 19 gespeichert ist, möchte dieses erstmalig verwenden.
Der Zugriffscode 6 ist in vorbeschriebener Weise auf einem separaten Speicher 8 hinterlegt, beispielsweise in Form eines auf einer Kreditkarte gespeicherten Datensatzes. Fig. 2 lässt schematisch mögliche Speicher 8 erkennen.

Der Inhaber des virtuellen Tickets 5 aktiviert dieses über eine Eingabestelle 9, die unter kommunikationstechnischer Zwischenschaltung einer lokalen Datenverarbeitungseinheit 15 an die zentrale Datenverarbeitungseinrichtung 19 kommunikationstechnisch angeschlossen ist. Bei einem erstmaligen Zugriff auf das virtuelle Ticket 5 wird mittels der lokalen Datenverarbeitungseinheit 15 ein entsprechender Datensatz generiert und an die zentrale Datenverarbeitungseinrichtung 19 gesandt. In Reaktion hierauf wird seitens der zentralen Datenverarbeitungseinrichtung 19 eine Kopie 14 des virtuellen Tickets 5 erstellt. Diese Ticketkopie 14, das heißt der zugehörige Datensatz wird an die lokale Datenverarbeitungseinheit 15 übersandt und dort gespeichert. Es findet dann hier eine Verarbeitung des Datensatzes statt, das heißt eine Verarbeitung der Kopie des virtuellen Tickets 5. Im Falle der Gültigkeit kann dem Verwender des virtuellen Tickets sodann entsprechender Einlass gewährt werden.

Bei einer nochmaligen Verwendung desselben virtuellen Tickets 5 findet die Verarbeitung ausschließlich lokal auf Basis der im Zuge der erstmaligen Ticketverwendung erstellten Ticketkopie 14 statt. Eine Datenübermittlung zur zentralen Datenverarbeitungseinrichtung 19 findet ebenso wenig statt, wie ein Datentransport von der zentralen Datenverarbeitungseinrichtung 19 zur zugehörigen Eingabestelle 9.

Es kann verfahrensseitig vorgesehen sein, dass die Ticketkopie 14 über einen vorgebbaren Zeitraum im Datenspeicher erhalten bleibt und alsdann eine automatische Löschung erfolgt. Bis zur Löschung der Ticketkopie 14 erfolgt im Falle des Zugriffs auf das virtuelle Ticket 5 eine ausschließliche Verarbeitung desselben mittels der zuvor erstellten Kopie statt:

### Bezugszeichenliste

- 1: Ticketingsystem
- 2: Benutzer
- 3: Verkaufsstelle
- 4: Anforderung
- 5: virtuelles Ticket
- 6: Zugangscode
- 7: Speicher des Ticketingsystems
- 8: separater Speicher
- 9: Validierungs- und/oder Kontrollstelle
- 10: Eingabe
- 11: Weitergabe
- 12: Übermittlung
- 13: Ausgangssignal
- 14: Ticketkopie
- 15: Datenverarbeitungseinheit
- 16: kommunikationstechnische Verbindung
- 17: kommunikationstechnische Verbindung
- 18: Nahbereich
- 19: zentrale Datenverarbeitungseinrichtung

## Patentansprüche

1. Verfahren zum Betrieb eines Ticketingsystems (1), bei dem
- ein virtuelles Ticket (5) erzeugt wird,
- dem virtuellen Ticket (5) ein benutzerunabhängiger Zugriffscode (6) zugeordnet wird,
- das virtuelle Ticket (5) zusammen mit dem Zugriffscode (6) gespeichert wird,
- der Zugriffscode (6) auf einem separaten Datenspeicher (8) hinterlegt wird oder hinterlegt ist
und bei dem ein Zugriff auf das virtuelle Ticket (5) durch Eingabe des auf dem separaten Datenspeicher (8) hinterlegten Zugriffscodes (6) an einer dafür vorgesehenen Eingabestelle (9) des Ticketingsystems (1) erfolgt.

2. Verfahren nach Anspruch 1, **dadurch gekennzeichnet, dass** dem virtuellen Ticket (5) bei dessen Erzeugung der Zugriffscode (6) zugeordnet wird.

3. Verfahren nach Anspruch 1 oder 2, **dadurch gekennzeichnet, dass** das virtuelle Ticket (5) zusammen mit dem Zugriffscode (6) zentral gespeichert wird.

4. Verfahren nach Anspruch 1, 2 oder 3, **dadurch gekennzeichnet, dass** das virtuelle Ticket (5) bei seiner ersten Verwendung aktiviert wird.

5. Verfahren nach einem der vorhergehenden Ansprüche, **dadurch gekennzeichnet, dass** als separater Datenspeicher (8) ein bereits im Besitz des Benutzers befindlicher Datenspeicher verwendet wird.

6. Verfahren nach einem der vorhergehenden Ansprüche, **dadurch gekennzeichnet, dass** als separater Datenspeicher (6) ein wiederverwendbarer Datenspeicher gewählt wird.

7. Verfahren nach einem der vorhergehenden Ansprüche 1 bis 6, **dadurch gekennzeichnet, dass** der Zugriffscode (6) vom Benutzer (2) bereitgestellt wird.

8. Verfahren nach einem der vorhergehenden Ansprüche, **dadurch gekennzeichnet, dass** bei einem erstmaligen Zugriff auf das virtuelle Ticket (5) eine Kopie (14) des Tickets (5) erstellt und in einem Datenspeicher der Eingabestelle (9) gespeichert wird, über die der Zugriff erfolgt.

9. Verfahren nach Anspruch 8, **dadurch gekennzeichnet, dass** die Kopie (14) des Tickets (5) für einen vorgebbaren Zeitraum in dem Speicher der Eingabestelle (9) gespeichert wird.

10. Verfahren nach Anspruch 8 oder 9, **dadurch gekennzeichnet, dass** Kopien (14) des virtuellen Tickets (5) erstellt und in den Datenspeicher vorgebbarer Eingabestellen (9) des Ticketingsystems gespeichert werden.

11. Verfahren nach einem der vorhergehenden Ansprüche, **dadurch gekennzeichnet, dass** nach Ablauf einer Ticketberechtigung das virtuelle Ticket (5) und etwaig erstellte Kopien (14) des virtuellen Tickets (5) automatisch gelöscht werden.

12. Verfahren nach einem der vorhergehenden Ansprüche 1 bis 7, **dadurch gekennzeichnet, dass** bei Präsentation des separaten Datenspeichers (8) an einer Eingabestelle (9) der Zugriffscodes (6) an einen Zentralrechner (19) gesendet wird.

13. Verfahren nach Anspruch 12, **dadurch gekennzeichnet, dass** die Daten des virtuellen Tickets (5) zur Bearbeitung an die Eingabestation (9) gesendet werden.

14. Verfahren nach Anspruch 13, **dadurch gekennzeichnet, dass** die Bearbeitung der Daten des virtuellen Tickets (5) eine Tarifermittlung ist.

15. Verfahren nach Anspruch 12, **dadurch gekennzeichnet, dass** die Tarifermittlung auf dem Zentralrechner (19) erfolgt.

16. Verfahren nach einem der vorhergehenden Ansprüche, **dadurch gekennzeichnet, dass** von einer Eingabestelle (9) erfasste Daten gespeichert und/oder zur Speicherung an eine zentrale Datenverarbeitungseinrichtung (19) übermittelt werden.
